Europäisches Patentamt

European Patent Office

Office européen des brevets

(11) Numéro de publication: **0 353 175**
**A1**

## DEMANDE DE BREVET EUROPEEN

(21) Numéro de dépôt: 89450010.7

(22) Date de dépôt: 26.07.89

(51) Int. Cl.⁵: **F 16 B 5/06**

(30) Priorité: 27.07.88 FR 8810346

(43) Date de publication de la demande:
31.01.90 Bulletin 90/05

(84) Etats contractants désignés:
AT BE CH DE ES GB GR IT LI LU NL SE

(71) Demandeur: Demolin, Jacques
La Ramée
F-33650 Cabanac Villagrains (FR)

Cluzant, Claude-Henri
La Gemmeyre
F-33650 Cabanac Villagrains (FR)

Cluzant, Bertrand
Le Château
F-33650 Cabanac Villagrains (FR)

(72) Inventeur: Demolin, Jacques
La Ramée
F-33650 Cabanac Villagrains (FR)

Cluzant, Claude-Henri
La Gemmeyre
F-33650 Cabanac Villagrains (FR)

Cluzant, Bertrand
Le Château
F-33650 Cabanac Villagrains (FR)

(74) Mandataire: Trolliet, Jean-Claude et al
Cabinet BURDIPAT 20, cours du Chapeau Rouge
F-33000 Bordeaux (FR)

(54) Panneaux et/ou éléments modulaires assemblables entre eux.

(57) L'invention a pour objet des panneaux et/ou éléments modulaires (1) dont au moins un chant est aménagé de part et d'autre des parements (2) d'un chanfrein à 45° (3) reliés par une feuillure (4) dont les parements (5) sont prolongés par une rainure (6) destinée à recevoir les languettes (10) d'un organe rigide de liaison (11) engendrant l'encastrement des panneaux et/ou éléments modulaires (1) une fois ledit organe (11) disposé par coulissement dans les feuillures (4) et rainures (6).

Fig.3

## Description

### Panneaux et/ou éléments modulaires assemblables entre eux

La présente invention concerne les panneaux et/ou éléments modulaires dont au moins un chant est aménagé pour recevoir et maintenir un organe de liaison rigide permettant l'assemblage entre eux desdits panneaux et/ou éléments modulaires de manière linéaire, linéaire et perpendiculaire, en équerre ou en croix.

On connaît des panneaux ou des éléments modulaires comportant sur leurs chants des aménagements leur permettant de s'assembler entre eux par l'intermédiaire d'au moins un élément d'assemblage ou de support, notamment ceux décrits dans le brevet FR 2 525 664 qui consiste à l'aménagement sur le chant des éléments d'une queue d'aronde mâle destinée à s'enfiler dans une queue d'aronde femelle disposée sur un élément de jonction, tel que montant ou traverse de section carrée ou rectangulaire, ladite queue d'aronde femelle étant aménagée sur les quatre faces des montants ou traverses de jonction afin de permettre un assemblage linéaire des éléments, perpendiculaire ou en croix, ce type de réalisation bien que présentant un assemblage esthétique, est toutefois laborieux compte tenu de la réalisation des queues d'aronde.

On connaît aussi tel que décrit dans le brevet FR 2 308 820 l'assemblage des éléments modulaires entre eux de manière linéaire, perpendiculaire ou en croix, par des organes de liaison à fiches circulaires s'insérant dans des évidements adéquats aménagés sur le chant des éléments, lesdits chants présentant de part et d'autre des parements et de manière symétrique des chanfreins à 45° séparés par un méplat correspondant au diamètre des fiches, lesdits chanfreins dans le cas d'assemblage perpendiculaire ou en croix s'adossent avec l'un ou les chanfreins d'autres éléments, les fiches des organes de liaison sont reliées entre elles par un tasseau, lesdites fiches sont maintenues de manière rectiligne par un assemblage linéaire de deux éléments, en équerre pour un assemblage de deux éléments perpendiculaires, linéaire et perpendiculaire pour l'assemblage de trois éléments ou en croix pour l'assemblage de quatre éléments. Ce mode de réalisation présente certains inconvénients pour l'assemblage de deux éléments de manière linéaire, en effet le tasseau de liaison des fiches engendre un évidement entre lesdits éléments et le tasseau suivant, dans le cas d'un assemblage en équerre, ledit tasseau est en saillie par rapport à l'alignement des biseaux des deux éléments.

L'invention a pour but de pallier aux inconvénients précédemment exposés.

L'invention a pour objet des panneaux et/ou éléments modulaires dont au moins un chant est aménagé pour recevoir et maintenir un organe de liaison rigide permettant leur assemblage entre eux de manière linéaire, linéaire et perpendiculaire, en équerre ou en croix, caractérisés en ce que le ou les chants de panneaux ou d'éléments modulaires de part et d'autre des parements sont dotés de manière symétrique de chanfreins à 45°, reliés selon des angles à 90° par une feuillure centrale, les parements des chanfreins et feuillures étant de dimensions égales, les parements de la feuillure centrale sont chacun prolongés par une rainure destinée à recevoir les languettes de section appropriée prolongeant le corps rigide de l'organe de liaison de section creuse ou pleine s'insérant entre les parements des feuillures de sorte à engendrer l'encastrement des panneaux ou éléments modulaires, la disposition et le nombre de languettes dépendant du type d'assemblage à réaliser, notamment quatre languettes pour l'assemblage de deux panneaux de manière linéaire ou en équerre, six languettes pour un assemblage linéaire et perpendiculaire de trois éléments, huit languettes pour un assemblage en croix.

D'autres caractéristiques de l'invention ressortiront plus clairement de la description qui va suivre faite en regard des dessins joints donnés à titre d'exemple non limitatif, où :

- la figure 1 est une vue en coupe de l'aménagement d'un chant de panneau ou d'élément modulaire,
- les figures 2 et 3, des organes de liaison pour un assemblage linéaire de deux panneaux,
- les figures 4 et 5 des organes de liaison pour un assemblage en équerre de deux panneaux,
- les figures 6, 7 et 8, des organes de liaison pour un assemblage linéaire et perpendiculaire de trois panneaux,
- la figure 9, pour un assemblage en croix de quatre panneaux.

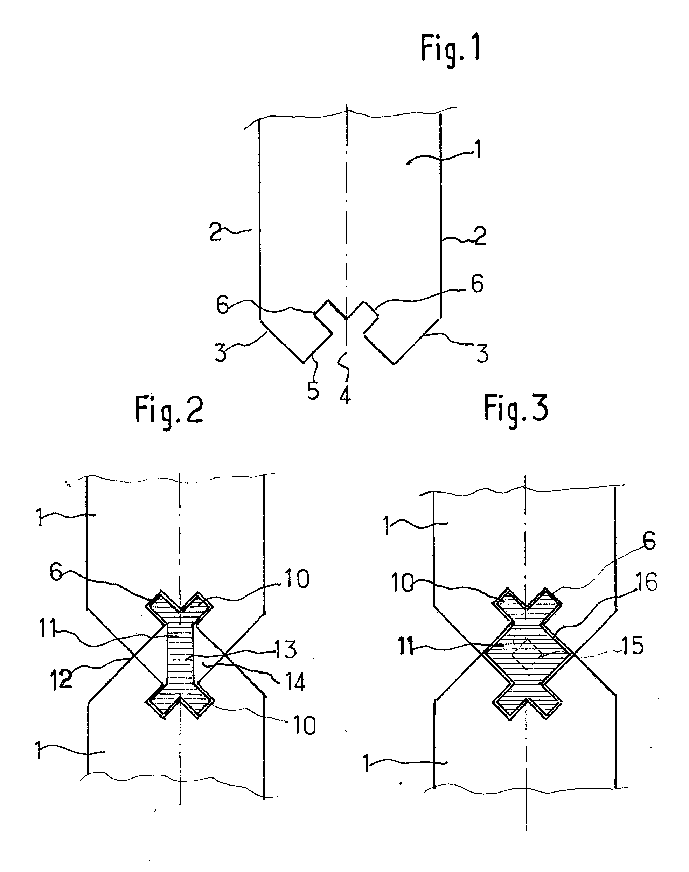

Tel que représenté figure 1, le chant d'un panneau ou d'élément modulaire 1 de part et d'autre des parements 2 présente de manière symétrique un chanfrein à 45° 3, lesdits chanfreins 3 sont reliés par une feuillure 4 à 90°, la jonction des parements 5 de la feuillure 4 avec les chanfreins 3 présente des angles à 90°, lesdits parements 5 et chanfreins 3 constituant un profil en W sont de dimensions identiques, chaque parement 5 de la feuillure centrale 4 est prolongé par une rainure 6 engendrant une forme en V destinée à recevoir les languettes 10 des organes rigides de liaison 11 représentés sur les figures 2 à 9, lesdites languettes 10 et organes 11 engendrent l'encastrement des panneaux et/ou éléments modulaires 1 une fois disposés par coulissement dans les feuillures 4 et rainures 6, la longueur desdits organes 11 et languettes 10 correspondant à la longueur de l'assemblage des panneaux et/ou éléments modulaires 1 à réaliser, ladite longueur pouvant correspondre à une longueur d'un chant de panneaux ou éléments modulaires 1 ou peut correspondre à la juxtaposition de plusieurs panneaux et/ou éléments modulaires 1 sur leur chant.

Tel que représenté figure 2, l'assemblage linéaire de deux panneaux et/ou éléments modulaires 1, le sommet 12 des feuillures 4 et chanfrein 3 en appui, comporte un organe de liaison 11 qui est constitué par un corps 13 de forme rectangulaire reliant les languettes 10 en V disposées symétriquement, ledit corps 13 s'insérant dans l'évidement 14 constitué par les feuillures 4. Selon la variante représentée figure 3, le corps 15 présente une section carrée dont les côtés 16 prennent appui sur les parements 5 des feuillures 4, les languettes 10 en V prolongent lesdits côtés 16 en deux sommets opposés du corps 15.

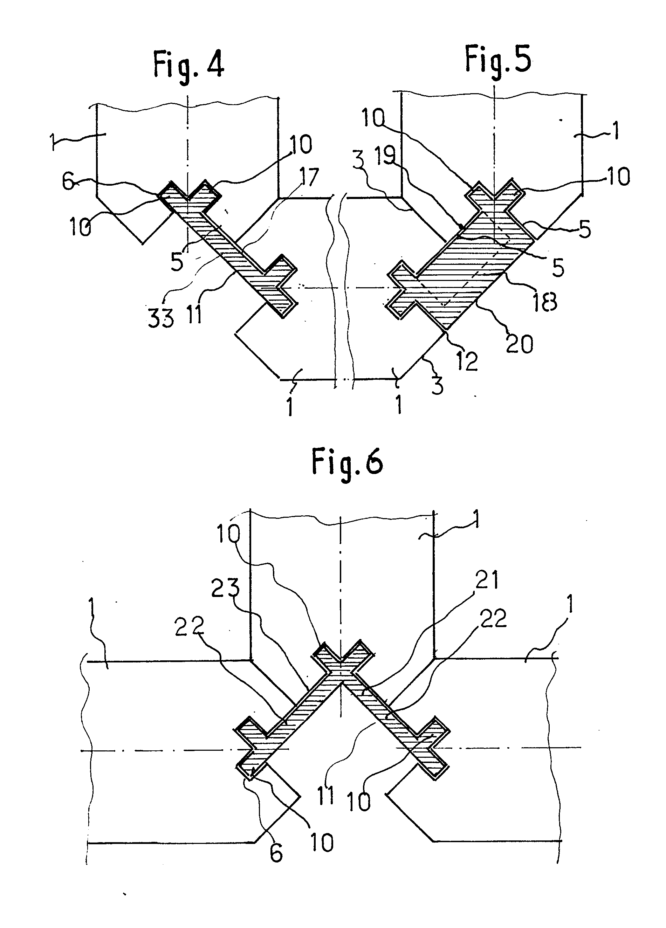

Tel que représenté figure 4, le corps 33 relie et prolonge deux languettes 10 opposées, les deux autres languettes 10 étant perpendiculaires audit corps 33, la face 17 dotée desdites languettes 10 perpendiculaires prend appui sur un des parements 5 des deux panneaux et/ou éléments modulaires 1 assemblés en équerre, un chanfrein 3 d'un panneau et/ou élément modulaire 1 en appui sur un des chanfreins 3 de l'autre panneau et/ou élément modulaire 1. Selon la variante représentée figure 5, le corps 18 présente une section rectangulaire de longueur correspondant à la dimension de deux parements 5 et une largeur correspondant à la dimension d'un parement 5, la face 19 prolongée parallèlement par les languettes 10 et perpendiculairement, prend appui sur un parement 5 de deux panneaux 1 et les largeurs chacunes sur l'autre parement 5 des feuillures 4, la face 20 parallèle à la face 19 prolonge le sommet 12 des feuillures 4 et est à l'aplomb des chanfreins 3, il va de soi que le corps 18 peut avantageusement être évidé comme représenté en pointillé.

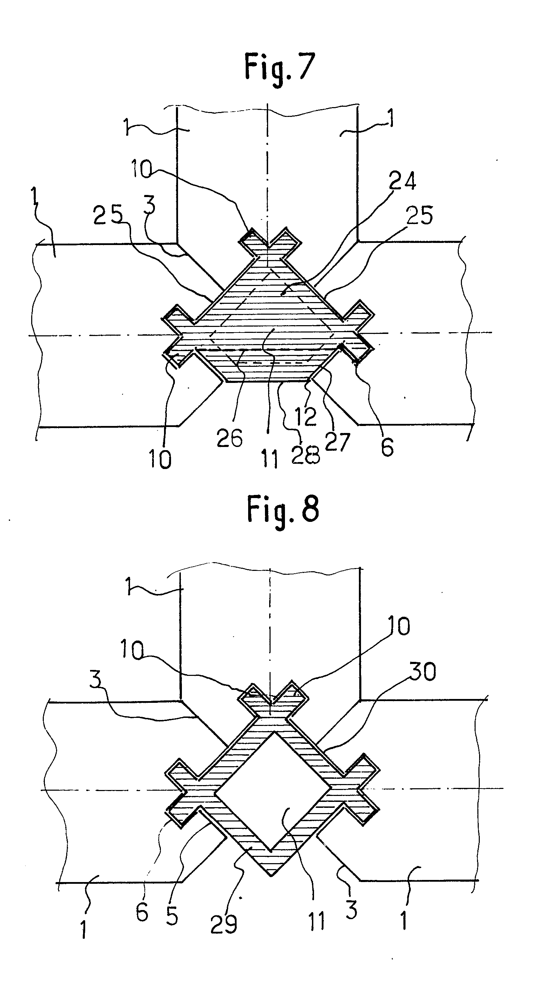

Selon la figure 6 pour assembler trois panneaux et/ou éléments modulaires 1 de manière linéaire et perpendiculaire, le corps 21 comporte deux branches à 90° 22 prolongeant et reliant chacune quatre languettes 10, en l'extrémité desdites branches 22 opposées à l'angle de raccordement et sur la face extérieure 23 chacune des branches 22 est dotée d'une languette 10 perpendiculaire, lesdites faces 23 prennent appui sur les deux parements 5 de la feuillure 4 de l'élément perpendiculaire et sur une des feuillures 5 des deux autres panneaux et/ou éléments modulaires 1 disposés de manière linéaire, l'élément perpendiculaire étant en appui par ses chanfreins 3, chacun sur un chanfrein 3 des deux autres panneaux et/ou éléments modulaires 1. Selon la variante représentée figure 7 pour réaliser un assemblage comme décrit pour la figure 6, le corps 24 présente une section triangulaire, le sommet de chaque côté 25 et 26 représenté en trait discontinu, est doté de deux languettes 10 disposées en prolongement des côtés 25 et perpendiculairement auxdits côtés 25, ces derniers prenant appui sur les parements 5 des feuillures 4 notamment sur les deux parements 5 du panneau et/ou élément modulaire 1 perpendiculaire aux deux autres panneaux et/ou éléments modulaires 1 disposés de manière linéaire sur lesquels elles prennent appui sur un seul de leur parement 5, le corps 24 de section triangulaire peut avantageusement être modifié afin de prendre appui sur les six parements 5 des feuillures 4 des trois panneaux et/ou éléments modulaires 1 assemblés, pour ce faire des prolongements 27 sont aménagés perpendiculairement en une extrémité des côtés 25, le côté 28 qui relie lesdits prolongements 27 s'aligne avec les deux sommets 12 opposés des panneaux et/ou éléments modulaires linéaires 1, le corps 24 peut être réalisé de manière à présenter une section creuse représentée en pointillé ; selon une autre variante, pour un assemblage de trois éléments comme décrit figure 6 et représenté figure 8, le corps 29 de section carrée, pleine ou creuse, présente trois sommets dotés de deux languettes 10 chacun, lesdites languettes 10 étant disposées en prolongement de chacun des côtés 30, les six parements 5 des feuillures 4 étant en appui sur lesdits côtés 30.

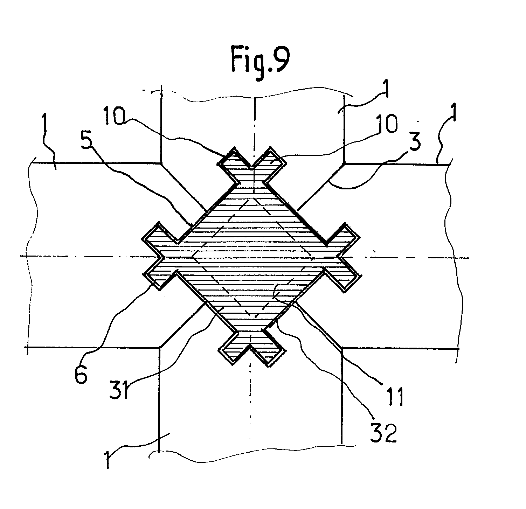

Selon la figure 9, l'assemblage de quatre panneaux et/ou éléments modulaires 1 en croix, comporte un corps 31 de section carrée, pleine ou creuse représentée en pointillé, chaque sommet est doté de deux languettes 10 prolongeant les côtés 32, ces derniers prenant appui sur tous les parements 5 des panneaux et/ou éléments modulaires 1.

**Revendications**

1°) Panneaux et/ou éléments modulaires dont au moins un chant est aménagé pour recevoir un organe rigide permettant leur assemblage entre eux de manière linéaire, linéaire et perpendiculaire, en équerre ou en croix, caractérisés en ce que le ou les chants des panneaux ou éléments modulaires (1) de part et d'autre des parements (2) sont dotés de chanfreins symétriques (3) à 45° reliés par une feuillure centrale (4) dont la jonction des chanfreins (3) avec les parements (5) de ladite feuillure (4) présente des angles à 90°, chaque parement (5) étant prolongé par une rainure (6) destinée à recevoir des languettes (10) d'organes rigides de liaison (11) dont les corps selon l'assemblage s'insérent entre les parements (5) des feuillures (4) en appui ou non sur lesdits parements (5).

2°) Panneaux et/ou éléments modulaires selon la revendication 1 caractérisés en ce que l'organe rigide de liaison (11) pour un assemblage linéaire de deux panneaux et/ou éléments modulaires (1), les sommets (12) des feuillures (4) et chanfreins (3) en appui, comporte quatre languettes (10) disposées en V symétriquement reliées par un corps (13) de forme rectangulaire s'insérant dans l'évidement (14) constitué par les feuillures (4).

3°) Panneaux et/ou éléments modulaires selon les revendications 1 et 2 caractérisés en ce que l'organe rigide de liaison (11) présente un corps (15) de section carrée dont deux sommets opposés sont dotés de languettes (10) prolongeant les côtés (16) en appui sur les parements (5) des feuillures (4).

4°) Panneaux et/ou éléments modulaires selon la revendication 1 caractérisés en ce que l'organe, rigide (11) pour un assemblage en équerre de deux panneaux et/ou éléments modulaires (1) un de leurs chanfreins (3) en appui, comporte quatre languettes (10) dont deux languettes (10) opposées sont prolongées et reliées par un corps (33) et dont la face (17) en appui sur les parements (5) est dotée de deux languettes (10) perpendiculaires.

5°) Panneaux et/ou éléments modulaires selon les revendications 1 et 4 caractérisés en ce que l'organe rigide de liaison (11) présente un corps (18) de section rectangulaire pleine ou creuse de longueur correspondant à la dimension de deux parements (5) et la largeur à la dimension d'un parement (5), la face (19) étant prolongée parallèlement par deux languettes (10) opposées et deux languettes (10) perpendiculaires, ladite face (19) prenant appui sur les parements (5) de chaque panneau et/ou élément modulaire (1) et les largeurs sur les autres parements (5).

6°) Panneaux et/ou éléments modulaires selon la revendication 1 caractérisés en ce que l'organe rigide de liaison (11) pour un assemblage de trois panneaux et/ou éléments modulaires (1) de manière linéaire et perpendiculaire, les chanfreins (3) du panneau perpendiculaire en appui sur un des chanfreins (3) des deux autres panneaux linéaires (1), comporte six languettes (10) reliées par un corps (21) constitué de deux branches à 90° (22) prolongeant et reliant quatre languettes (10), aux extrémités desdites branches (22) opposées à l'angle de raccordement et sur les faces extérieures (23) chaque branche (22) est dotée d'une languette perpendiculaire (10), la face (23) prenant appui sur les deux parements (5) de l'élément perpendiculaire (1) et sur un des parements (5) des éléments (1) linéaires.

7°) Panneaux et/ou éléments modulaires selon les revendications 1 et 6, caractérisés en ce que l'organe rigide de liaison (11) présente un corps (24) de section triangulaire pleine ou creuse, le sommet de chaque côté (25, 26) est doté de deux languettes (10) disposées en prolongement des côtés (25) et perpendiculairement les côtés (25) prennent appui sur les deux parements (5) de l'élément (1) perpendiculaire et sur un des parements (5) des éléments (1) linéaires.

8°) Panneaux et/ou éléments modulaires selon les revendications 1, 6 et 7 caractérisés en ce que les extrémités des côtés (25) dotés de prolongements perpendiculaires (27) engendrent l'appui de tous les parements (5) sur le corps (24), lesdits prolongements (27) étant reliés par un côté (28) aligné avec les deux sommets (12) des panneaux et/ou éléments disposés linéairement.

9°) Panneaux et/ou éléments modulaires selon les revendications 1 et 6 caractérisés en ce que l'organe de liaison rigide (11) présente un corps (29) de section carrée pleine ou creuse dont trois sommets sont dotés de deux languettes (10) chacun disposées en prolongement de chacun des côtés (30).

10°) Panneaux et/ou éléments modulaires selon la revendication 1 caractérisés en ce que l'organe rigide de liaison (11) pour un assemblage de panneaux et/ou éléments modulaires (1) en croix présente un corps (31) de section carrée pleine ou creuse, chaque sommet étant doté de deux languettes (10) prolongeant les côtés (32) prenant appui sur les huit parements (5) des panneaux et/ou éléments modulaires (1).

11°) Panneaux et/ou éléments modulaires selon la revendication 1 caractérisés par un organe rigide de liaison (11) correspondant à une longueur d'un chant de panneau et/ou élément modulaire (1) ou à la longueur obtenue par la juxtaposition de plusieurs panneaux et/ou éléments modulaires (1) sur leur chant.

Fig.1

Fig.2

Fig.3

EP 0 353 175 A1

# Fig. 4

# Fig. 5

# Fig. 6

# Fig. 7

# Fig. 8

# Fig.9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | FR-A-2 308 820 (S.T.S. SOCIETA TOSCANA SEMILAVORATI S.R.L.) <br> * figures 5,7,9,10 * <br> --- | 1 | F 16 B 5/06 |
| D,A | FR-A-2 525 664 (H. MINOUI) <br> * figures 1,2 * <br> --- | 1 | |
| A | CH-A- 455 536 (G. SONTHEIMER) <br> * en entier * <br> --- | 1 | |
| A | FR-A-2 372 341 (J. REAUD) <br> ----- | | |

|  | DOMAINES TECHNIQUES RECHERCHES (Int. Cl.5) |
|---|---|
|  | F 16 B <br> A 47 B |

Le présent rapport a été établi pour toutes les revendications

| Lieu de la recherche | Date d'achèvement de la recherche | Examinateur |
|---|---|---|
| BERLIN | 20-09-1989 | SCHAEFFLER C.A.A. |